# EUROPEAN PATENT APPLICATION

(11) **EP 4 672 638 A1**
(43) Date of publication of application: **31.12.2025**
(21) Application number: 25172536.2
(22) Date of filing: 25.04.2025
(51) Int. Cl.: H04B 10/50, H04J 14/02

(54) **SCALABLE MULTI-BAND WDM OPTICAL COMPUTE INTERCONNECT ARCHITECTURES**

(30) Priority: 27.06.2024 US 202418757106
(71) Applicant: INTEL Corporation, Santa Clara, CA 95054 (US)
(72) Inventor: Lin, Wenhua, Fremont CA, 94539 (US); Malouin, Christian, San Jose CA, 95136 (US); Liao, Ling, Santa Clara CA, 95054 (US); Fathololoumi, Saeed, Los Gatos, 95032 (US); Hoang, Thang, Kanata, K2M1C4 (CA)
(74) Representative: Samson & Partner Patentanwälte mbB

(57) **Abstract**

Scalable multi-band wavelength division multiplexing (WDM) transceiver architectures suitable for high-bandwidth optical Compute interconnects (OCI) between computing resources. The WDM wavelength range is divided into two or more color/wavelength bands. Each band of WDM optical signals may be coupled through separate semiconductor optical amplifiers (SOAs) that are tuned to the different bands. The bands may be conveyed through an optical MUX/DeMUX for transmission through an optical fiber. The optical MUX/DeMUX may comprise a band MUX/DeMUX or a polarization MUX/DeMUX.

## Description

### BACKGROUND

Many computing applications, such as machine learning (ML), can be enhanced through higher bandwidth communication between compute resources because sharing computation memory resources between various compute nodes is increasingly necessary. Sharing computing tasks across processor (CPU, XPU, and GPU) clusters optimizes total compute capacity. Traditionally, data connections between compute units of a cluster that typically range from a few mm to <250 m in length have been electrical. However, an optical data connection architecture known as Optical Compute Interconnect (OCI) is emerging as a viable means of implementing Tbps aggregated links between computation and/or memory nodes.

In OCI, dense wavelength division multiplexing (DWDM) offers viable solutions toward scaling up and scaling out computation resources as well as further enabling the disaggregation of such computation resources. OCI may need to significantly increase the number of wavelengths (N) in DWDM, as well as increase the number of desired input/output fibers (M), and also raise the optical modulation Baud rate (R) to achieve a total capability (N*M*R) much greater than today's links of 2 Tbps (8λ*8 fibers*32GBaud NRZ). For example, 16 Tbps OCI may require a first doubling of wavelengths: (16λ *8 fibers*128Gbps PAM4). 32Tbps OCI may require another doubling of wavelengths: (32 λ*8 fibers * 128Gbps PAM4).

New OCI architectures capable of such wavelength scaling, and associated photonic integrated circuit (PIC) implementations of these architectures, are therefore of commercial interest.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference labels have been repeated among the figures to indicate corresponding or analogous elements. In the figures:
FIG. 1 is a schematic of a scalable dual-band OCI transmitter architecture, in accordance with some embodiments;
FIG. 2A and 2B are schematics of scalable dual-band OCI receiver architectures, in accordance with some embodiments;
FIG. 3 is a scalable multi-band OCI transceiver architecture comprising a polarization MUX and DeMUX, in accordance with some dual-band embodiments;
FIG. 4 is a PIC implementation of a dual-band OCI transceiver architecture for 16 channels, in accordance with some embodiments;
FIG. 5 is a schematic of a scalable multi-band OCI transmitter architecture, in accordance with some quad-band embodiments;
FIG. 6A, 6B and 6C are schematics of a 4x1 MUX, in accordance with some embodiments;
FIG. 7A and 7B are schematics of multi-band OCI receiver architectures, in accordance with some embodiments;
FIG. 8 is a schematic of a 1x4 DeMUX, in accordance with some embodiments;
FIG. 9 is a PIC implementation of a quad-band OCI transceiver architecture for 32 channels, in accordance with some embodiments;
FIG. 10A is a schematic of a compute cluster comprising a multi-band OCI transceiver PIC, in accordance with some embodiments;
FIG. 10B is a schematic of a compute cluster comprising a multi-band OCI transceiver PIC, in accordance with some alternative embodiments; and
FIG. 11 is a functional block diagram of an electronic computing device, that may include one or more scalable multi-band OCI transceivers, in accordance with some embodiments.

### DETAILED DESCRIPTION

Embodiments are described with reference to the enclosed figures. While specific configurations and arrangements are depicted and discussed in detail, this is done for illustrative purposes only. Persons skilled in the relevant art will recognize that other configurations and arrangements are possible without departing from the spirit and scope of the description. It will be apparent to those skilled in the relevant art that techniques and/or arrangements described herein may be employed in a variety of other systems and applications other than what is described in detail herein.

Reference is made in the following detailed description to the accompanying drawings, which form a part hereof and illustrate exemplary embodiments. Further, it is understood that other embodiments may be utilized and structural and/or logical changes may be made without departing from the scope of claimed subject matter. It should also be noted that directions and references, for example, up, down, top, bottom, and so on, may be used merely to facilitate the description of features in the drawings. Therefore, the following detailed description is not to be taken in a limiting sense and the scope of claimed subject matter is defined solely by the appended claims and their equivalents.

In the following description, numerous details are set forth. However, it will be apparent to one skilled in the art, that embodiments may be practiced without these specific details. In some instances, well-known methods and devices are shown in block diagram form, rather than in detail, to avoid obscuring the embodiments. Reference throughout this specification to "an embodiment" or "one embodiment" or "some embodiments" means that a particular feature, structure, function, or characteristic described in connection with the embodiment is included in at least one embodiment. Thus, the appearances of the phrase "in an embodiment" or "in one embodiment" or "some embodiments" in various places throughout this specification are not necessarily referring to the same embodiment. Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

As used in the description and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items.

The terms "coupled" and "connected," along with their derivatives, may be used herein to describe functional or structural relationships between components. These terms are not intended as synonyms for each other. Rather, in particular embodiments, "connected" may be used to indicate that two or more elements are in direct physical, optical, or electrical contact with each other. "Coupled" may be used to indicated that two or more elements are in either direct or indirect (with other intervening elements between them) physical or electrical contact with each other, and/or that the two or more elements co-operate or interact with each other (e.g., as in a cause-and-effect relationship).

The terms "over," "under," "between," and "on" as used herein refer to a relative position of one component or material with respect to other components or materials where such physical relationships are noteworthy. For example, in the context of materials, one material or layer over or under another may be directly in contact or may have one or more intervening materials or layers. Moreover, one material between two materials or layers may be directly in contact with the two materials/layers or may have one or more intervening materials/layers. In contrast, a first material or layer "on" a second material or layer is in direct contact with that second material/layer. Similar distinctions are to be made in the context of component assemblies.

As used throughout this description, and in the claims, a list of items joined by the term "at least one of" or "one or more of" can mean any combination of the listed terms. For example, the phrase "at least one of A, B or C" can mean A; B; C; A and B; A and C; B and C; or A, B and C.

Multi-band WDM transceiver architectures, as described further below, can enable highly scalable and low-cost OCI architectures that may be implemented with silicon photonic (SiPh) integrated circuits. Generally, the multi-band architectures described herein divide a range of channel wavelengths propagated within the transceiver across multiple color/wavelength (e.g., red/blue) bands. Each color band comprises a fraction of the channel wavelengths, enabling a unified transmission link and transmit-receive (TRx) PIC design that utilizes more than 8 channel wavelengths yet does not rely on a semiconductor optical amplifier (SOA) of wide gain-bandwidth, which remains elusive and poses significant technological challenges (e.g., Quantum well design, etc.).

By mitigating SOA bandwidth constraints, the multi-band architectures described herein allow the number of channel wavelengths to be scaled without incurring a greater cross-gain modulation and four-wave mixing nonlinearity penalty associated with passing DWDM signals having a greater number of wavelengths through an in-line SOA. Because nonlinear optical phenomena (e.g., four wave mixing) of an SOA impacts the optical signal to noise ratio (OSNR) of an optical circuit, the multi-band architectures described herein may also improve system bit error rate (BER) and device performance (such as gain uniformity and power output uniformity). The multi-band architectures described herein may therefore enable OCI to better accommodate the greater BER requirements imposed by the emerging PAM4 modulation format, for example, as incorporated into Peripheral Component Interconnect Express (PCIe7) and Universal Chiplet Interconnect Express (UCIe) specifications.

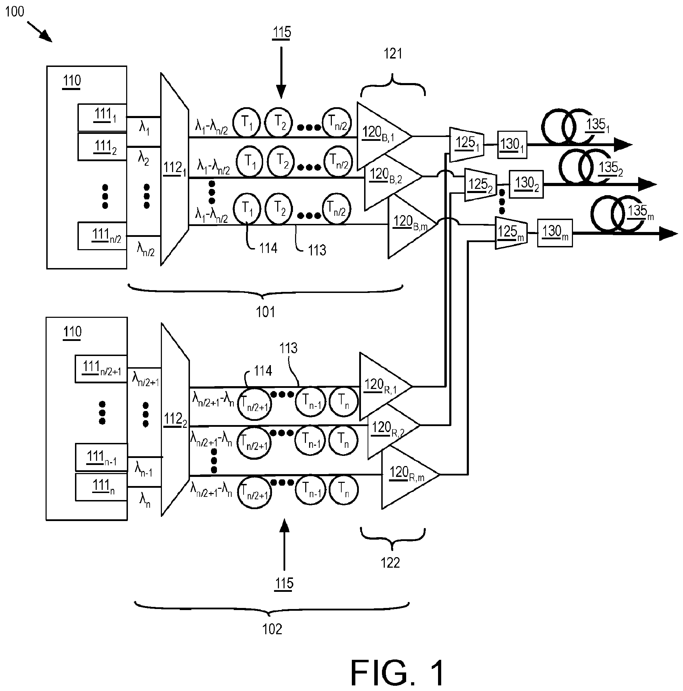

FIG. 1 is a schematic of an *n* wavelength scalable dual-band OCI transmitter architecture 100 comprising first and second banks 101,102 of wave division multiplexing photonic circuitry. Each bank 101, 102 includes *m* optical waveguides 113 that are to each propagate WDM optical signals spanning one band of the channel wavelengths. The number of wavelengths *n* may vary with implementation (e.g., 8, 12, 16, or 32, etc.). In the illustrated example, the number of wavelengths *n* is divided equally between banks 101 and 102. Photonic circuitry for bank 101 is to multiplex and spit signals launched from a light emitter array 110. A first emitter array 110 include emitters 111₁ - 111_{*n*/2} that output optical signals over *n*/2 consecutive, or periodic, wavelength channels associated with center wavelengths, or lines, λ₁ - λ_{*n*/2}. Photonic circuitry for bank 102 is similarly to multiplex and spit signals launched from another light emitter array 110 including emitters 111 _{*n*/*2+*1} - 111*ₙ*. These emitters are to output optical signals over *n*/2 consecutive wavelength channels associated with center wavelengths λ_{*n*/2+1} - λ*ₙ*, which are all longer wavelengths than the channel wavelengths λ₁- λ_{*n*/2}*.* Bank 101 may therefore be referred to as a blue color bank while bank 102 is referred to as a red color bank.

The channel wavelengths λ₁- λ*ₙ* may span any portion of optical spectrum, such as 1270 nm - 1590 nm. In some exemplary embodiments, the channel wavelengths λ₁- λ*ₙ* span at least a portion of the O-Band (i.e., 1360 - 1270 nm), the L-Band (i.e., 1577 - 1565 nm) and/or at least a portion of C-Band (1564-1530) of the electromagnetic spectrum. Channel spacing over λ₁- λ*ₙ* may vary with implementation. However, for some DWDM embodiments, channel spacing is less than 1.6 nm (i.e., <200 GHz at 1550 nm) for at least the channel wavelengths of one of band. An inter-band spacing between a longest channel of band (λ_{*n*/2}) and the shortest channel of band (λ_{*n*/2+1}) may be approximately the same as an intra-band channel spacing between wavelengths associated with one band. However, inter-band spacing may also be significantly different than intra-band channel spacing (e.g., >50% larger), leaving the desired guard band between λ_{*n*/2} and λ_{*n*/2+1}

Output signals from light emitter array(s) 110 are coupled into one of optical multiplexer/splitters 112₁, 112₂, which output WDM optical signals spanning the first or second band of wavelengths onto each of *m* optical waveguides 113. Multiplexer/splitters 112₁, 112₂ may each have any device architecture, as embodiments herein are not limited in this respect. The architecture of multiplexer/splitter 112₁ may also be substantially the same as the architecture of multiplexer/splitter 112₂. In some embodiments where *n*/2 is equal to *m*, multiplexer/splitter 112₁ and 112₂ have a square (e.g., 8x8) MUX/split device architecture that may comprise a multi-mode interference (MMI) coupler/power splitter.

For bank 101, a plurality of optical transmission modulators 114 are coupled to each optical waveguide 113 to modulate the WDM optical signals spanning a first band of channel wavelengths with transmission data 115. In the illustrated embodiment, each optical modulator 114 is a (micro) ring resonator modulator (MRM) tuned to one of the channel wavelengths in one of the band. For bank 101, modulators 114 are each tuned to modulate transmission power of one of wavelengths λ₁ - λ_{*n*/2}. For bank 102, modulators 114 are cach tuned to modulate transmission power of one of wavelengths λ_{*n*/2+1} - λ*ₙ*. In exemplary embodiments, relatively low optical power is input into each MRM, for example less than 3-5 dBm, to limit self-heat nonlinearity-induced baseline wander. Noting an OCI receiver transmission link will further include some length of optical fiber, optical circuitry for bank 101 includes a post-modulator 114 SOA group 121, which has gain bandwidth optimized for wavelengths λ₁ - λ_{*n*/2}, while optical circuitry for bank 102 comprises an SOA group 122, which has gain bandwidth optimized for wavelengths λ _{*n*/*2+*1} - λ*ₙ*.

In exemplary embodiments, SOA group 121 includes *m* SOAs 120_{B,1} - 120_{B,*m*} that have a center wavelength within a blue band. In some embodiments, all SOAs 120_{B,1} - 120_{B,*m*} have substantially a same first center wavelength, and may have substantially a same first photoluminescence (PL) band, same first 3 dB gain bandwidth (e.g., ~12 nm), noise figure, saturation optical power, etc. The first center SOA wavelength may fall anywhere within wavelengths λ₁ - λ_{*n*/2}, and is advantageously proximal to a center wavelength of the first band (e.g., λ_{*n*/4}). All SOA 120_{R,1} - 120_{R,*m*} may similarly have substantially a same second center wavelength, and may have substantially a same second PL band, same second 3 dB gain bandwidth, noise figure, saturation optical power, etc. The second center SOA wavelength may fall anywhere within λ_{*n*/2+1} - λ*ₙ*, and is advantageously proximal to a center wavelength of the second band (e.g., λ _{*3n*/4}). Although the 3 dB gain bandwidth of SOA group 121 may overlap with the 3 dB gain bandwidth SOA group 122, the 3 dB gain bandwidth of SOA group 121 is exclusive of one or more of wavelengths λ _{*n*/2+1} - λ*ₙ* while the 3 dB gain bandwidth of SOA group 122 is exclusive of one or more of wavelengths λ₁ - λ_{*n*/2}.

Following amplification by a band-specific SOA, the wavelengths of the two bands are combined for launching into one or more optical fibers. As shown in FIG. 1, individual optical waveguides 113 of bank 101 are coupled to a first input port of a corresponding 2x1 optical multiplexer 125₁-125ₘ while individual optical waveguides 113 of bank 102 are coupled to a second input port of the 2x1 optical multiplexers 125₁-125ₘ. Multiplexers 125₁-125ₘ may share the same device architecture. In some embodiments, the band multiplexer comprises a 2x1 bandpass filter (BPF). SiPh may implement a BPF with, for example, an ultra-flat Bragg grating similar to laser Bragg Grating, a triple or double ring-assisted Mach Zender interferometer (MZI), a Bragg grating-assisted contra-directional coupler / MZI, or coupled-resonator optical waveguides. In other embodiments, each multiplexer 125₁-125ₘ is a 2x1 power combiner, such as a 2x1 MMI coupler. In still other embodiments, each multiplexer 125₁-125ₘ is a polarization multiplexer. The polarization multiplexer may, for example, comprise 2x1 polarization rotator and combiner (PRC), which may also be implemented by SiPh.

As shown in FIG. 1, transmitter architecture 100 terminates at an output coupler array comprising a plurality of fiber couplers 130. In the illustrated example, *n* WDM signals are to be launched from *m* corresponding fiber couplers 130 into an array of *m* optical fibers 135₁-135*ₘ* for a transmission throughput of *n***m***R.* Each fiber coupler 130 may have any device architecture suitable for coupling from waveguide to an optical fiber. In some examples, each fiber coupler 130 may comprise an edge coupler (EC), such as an inverse/inverted taper edge coupler, for example. Each fiber coupler may comprise a grating coupler (GC), for example, Each optical fiber 135 may be any known to be suitable for OCI applications. The fiber may comprise a single mode (SM) fiber core, for example. A fiber core may have any suitable composition, but in exemplary embodiments is of a glass suitable for transmission of the band(s). The glass may be SiO₂, SiO₂ doped with GeO₂, germanosilicate, phosphorus pentoxide, phosphosilicate, Al₂O₃, aluminosilicate, or the like, or any combinations thereof. In exemplary SM embodiments, core diameter is less than 10µm (e.g., ~9 µm). Along with the fiber core, each optical fiber may include one or more cladding axially surrounding the fiber core.

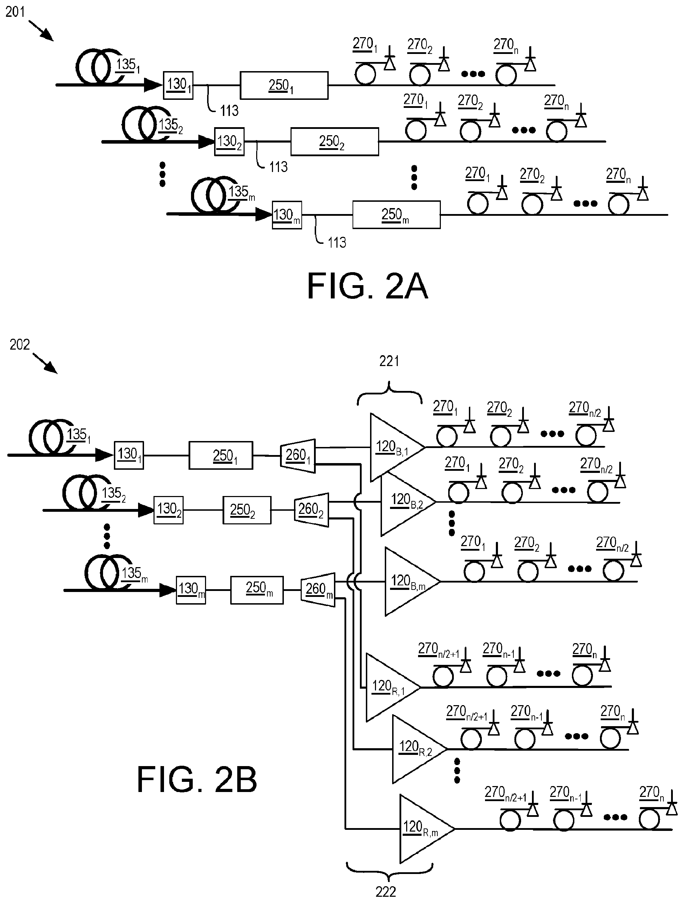

FIG. 2A is a schematic of an OCI receiver architecture 201, in accordance with some embodiments. Receiver architecture 201 is compatible with embodiments of transmitter architecture 100 that include a band multiplexer or power combiner. Receiver architecture 201 comprises a plurality of input fiber couplers 130. In the illustrated example, *m* WDM signals of arbitrary polarization are to be received from an array of *m* optical fibers 135₁-135ₘ into *m* corresponding fiber couplers 130, which is advantageously a polarization-independent fiber coupler. Each fiber coupler 130 is to propagate both TE and TM modes into an optical waveguide 113 simultaneously. Optical waveguide 113 may be optimized for low propagation loss for both TE/TM modes, such as a wide waveguide width, or optimized waveguide core dimension for quasi-polarization independency. Each optical waveguide 113 couples into an optical signal conditioner 250, such as a polarization splitter-rotator (PSR) and a polarization combiner (PC) to convert all optical input signals to TE polarization. For the PC, two outputs of the PSR are coupled into inputs of a tunable MZI where phase shifters are controlled through heater power to adjust the phase of the incoming light, such that a desired single polarization can be obtained at one output waveguide of the MZI. Alternatively, signal conditioner 250 may comprise an endless polarization combinerOptical waveguide 113 propagates the TE signals to an array of optical signal detectors 270₁-270*ₙ*. Each detector 270 comprises, for example, a self-powered photodetector (SPPD) coupled to an optical waveguide 113 through a micro ring add/drop filter that is wavelength selective.

FIG. 2B is a schematic of a dual-band OCI receiver architecture 202, which may offer scaling advantages over receiver architecture 201. Receiver architecture 202 is compatible with embodiments of transmitter architecture 100 that include a band multiplexer or power combiner. As shown, optical waveguide 113 couples signals input through fiber coupler 130 to optical signal conditioner 250, and further propagate TE mode signals to 1x2 to one of *m* band demultiplexers 260₁-260*ₘ*. In some embodiments, band demultiplexers 260₁-260*ₘ* each have the same architecture as multiplexers 125₁-125ₘ (FIG. 1) to separate the red and blue bands multiplexed in transmitter architecture 100. Receiver architecture 202 (FIG. 2B) may further comprise the band-specific SOA group 221 and SOA group 222, which may be substantially as described above for SOA group 121, 122 (FIG. 1). For SOA group 221 (FIG. 2B), each SOA 120_{B,1} - 120_{B,n/2} is to amplify the optical signal power before propagating to detectors 270₁-270_{n/2}. For SOA group 222, each SOA 120_{R,1} - 120_{R,n/2} is to amplify the optical signal power before propagating to detectors 270 _{n/2+1} - 270ₙ.

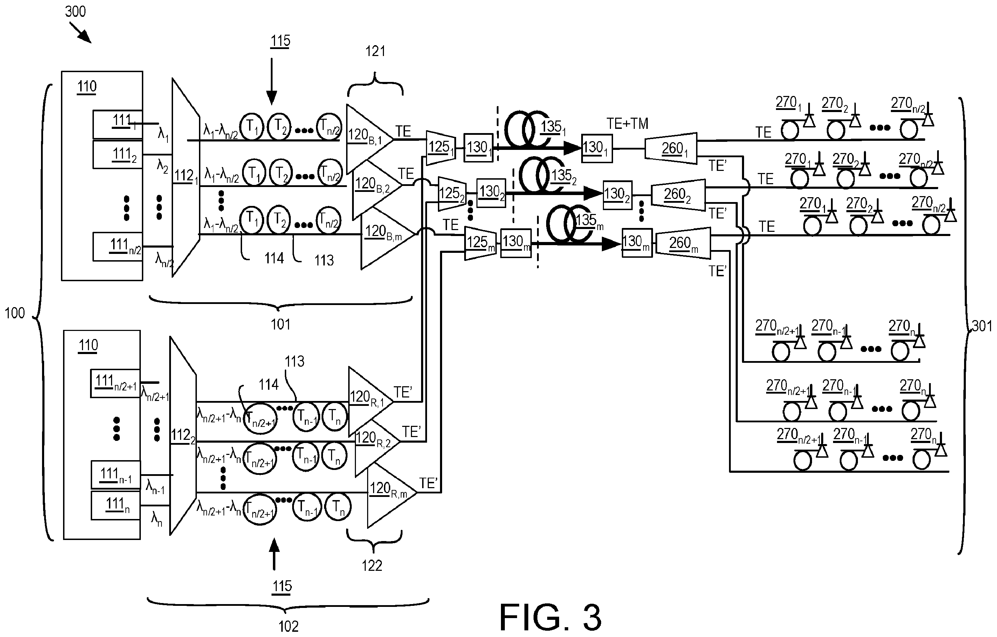

FIG. 3 is a scalable multi-band OCI transceiver architecture 300 further illustrating embodiments of dual-band transmitter architecture 100 including a polarization MUX and a dual-band receiver architecture 301 including a polarization DeMUX. For architecture 300, each of multiplexers 125₁ - 125*ₘ* comprise a 2x1 polarization rotator-combiner that changes signals propagated by waveguides 113 within one of banks 101,102 from a TE guided mode to a TM guided mode propagated to a second input port of the 2x1 polarization MUX. On the receiver side, demultiplexers 260₁ - 260*ₘ* receive WDM signals from couplers 130 in TE and TM modes. In some embodiments, each DeMUX 260 comprises an endless polarization DeMUX, for example including a polarization beam splitter that couples signals of TE mode to a first waveguide and couples signals of TM mode to a second waveguide where they are further converted to the TE mode (TE') by a polarization rotator. The two waveguides may be coupled by one or more MMI couplers with a phase control in at least one of the waveguides (e.g., through heater power) to reach a known polarization state. Alternatively, each DeMUX 260 may comprise a polarization combiner. In other embodiments, each DeMUX 260 comprises a PSR that splits optical signals propagating in a TE guided mode from those propagating in a TM guided mode, which are further converted back to a TE guided mode (TE'). The TE and TE' modes output by each DeMUX 260 are coupled into signal detectors 270₁ - 270_{*n*/2} and detectors 270_{*n*/2+1} - 270*ₙ*, respectively. Optionally, a band-specific SOA may also be incorporated into receiver architecture 301, for example as described for receiver architecture 202.

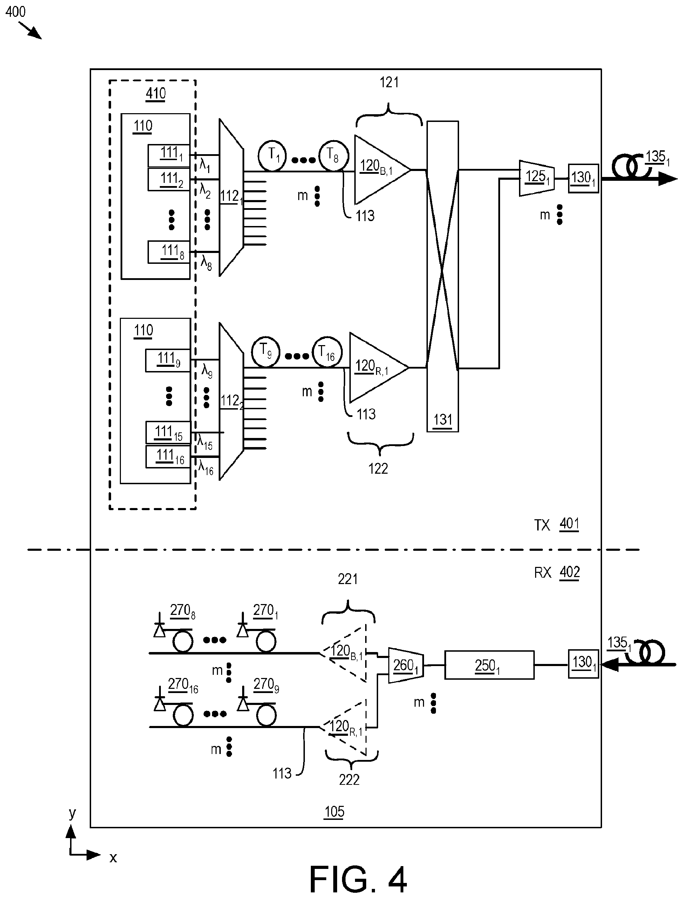

FIG. 4 illustrates a PIC 400 implementation of a dual-band OCI transceiver architecture for 16 channels, in accordance with some embodiments. A PIC transceiver may include any of the photonic circuitry described above in the context of transmitter architectures 100, receiver architectures 201, 202, and transceiver architecture 300.

PIC 400 is advantageously a single-chip transceiver, including one monolithic region of a substrate 105. The substrate 105 may have any composition suitable for the fabrication of planar optical waveguides. In advantageous embodiments, substrate 105 comprises one or more layers of silicon. Substrate 105 may include a device material layer of substantially pure monocrystalline silicon. The device material layer may be a top layer of a semiconductor-on-insulator (SOI) substrate material stack further comprising an underlying insulator material layer. In exemplary embodiments, where the device material layer is substantially pure silicon, the insulator material is advantageously predominantly silicon and oxygen (e.g., SiO₂). One or more additional substrate material layers may be under, or on a back side of, the insulator material layer as mechanical support. For example, bulk silicon of any thickness (e.g., 20-800 µm) may on the back side of the insulator material. Substrate 105 may alternatively include other materials, such as a monolithic glass layer.

PIC 400 comprises optical transmitter circuitry 401 over a first area (footprint) of a substrate 105 and optical receiver circuitry 402 over a second area of substrate 105. In exemplary SiPh embodiments, optical transmitter circuitry 401 implements dual-band transmitter architecture 100 (FIG. 1), for example where optical waveguides 113 are planar waveguides, which may comprise a ridge over substrate 105. The planar ridge waveguides may comprise silicon, for example as either pure silicon or as a compound of silicon and nitrogen that may display lower non-linear losses than pure silicon.

In some embodiments, optical transmitter circuitry 401 includes an integrated laser source 410. In other embodiments denoted by the dashed box, laser source 410 may be external of PIC 400 with optical transmitter circuitry 401 instead including additional fiber couplers (not depicted) to interface with an external laser source. For embodiments with an integrated laser source, each light emitter 111 is advantageously a laser diode, and more specifically a hybrid-silicon laser diode for exemplary SiPh embodiments. Hybrid-silicon laser diodes comprise an active portion of waveguide 113. The active waveguide portion is coupled to a passive portion of waveguide 113, for example having a larger transverse width than the active portion. The term "hybrid" is in reference to a non-silicon (e.g., III-V) material, which may be bonded to substrate 105. The III-V material may comprise any suitable P-i-N diode material stack, for example including quantum well (QW) or quantum dot (QD) material heterostructures between an n-type material layer and a p-type material layer. Such heterostructures may be a Group III-V crystalline alloy material system, such as a GaAs/InGaAs or InP/InGaP, for example.

A first emitter array 110 outputs optical signals within a first (e.g., blue) wavelength band comprising eight shorter wavelengths λ₁ - λ₈. A second emitter array 110 outputs optical signals within a second (e.g., red) wavelength band comprising eight longer wavelengths λ₉ - λ₁₆. Optical MUX/splitters 112₁ - 112₂ output DWM signals propagated by each of *m* optical waveguides 113, substantially as described above. In some embodiments where MUX/splitters 112 each comprise a MMI coupler, the MMI coupler includes *m* input ports optically coupled to *m* output ports through a multi-mode waveguide, power splitting the multiplexed signals across each output port. For a first band, each of *m* waveguides 113 are coupled to 8 MRM and further coupled to one of *m* blue SOA 120 of SOA group 121. For a second band, each of *m* waveguides 113 are coupled to 8 MRM and further coupled one of *m* red SOA 120 of SOA group 122. Each SOA may comprise any suitable gain medium and/or pumping architecture, and may, for some SiPh embodiments include one or more III-V materials heterogeneously integrated with substrate 105.

Output ports of SOA groups 121, 122 are optically coupled through separate planar waveguides that convey signals to input ports of each of *m* optical multiplexers 125 through one or more waveguide intersection array 131. Two or more optical waveguides 113 may cross within waveguide intersection array 131 to route signals of different wavelength bands to distinct input ports of multiplexers 125. Waveguide intersection array 131 may comprise a 2x2 waveguide crossing, which may have any waveguide crossing architecture suitable for SiPh and offering acceptable cross-talk and/or optical loss. A waveguide crossing may be a planar direct crossing, a planar crossing based on multi-mode interference, a planar crossing comprising a resonant cavity, a planar sub-wavelength grating crossing, or any crossing structure comprising a vertical coupler of silicon, silicon nitride, polymer, etc.

PIC 400 includes a first set of *m* fiber couplers 130 coupled to output ports of multiplexers 125 and a second set of *m* fiber couplers 130 coupled to one of *m* input signal conditioners 250 within receiver 402. PIC 400 further may further include any of the photonic circuitry described for the receiver architectures above terminating at 16 optical signal detectors 270. SOA groups 221, 222 are illustrated in dashed line to emphasize they are optional within PIC 400.

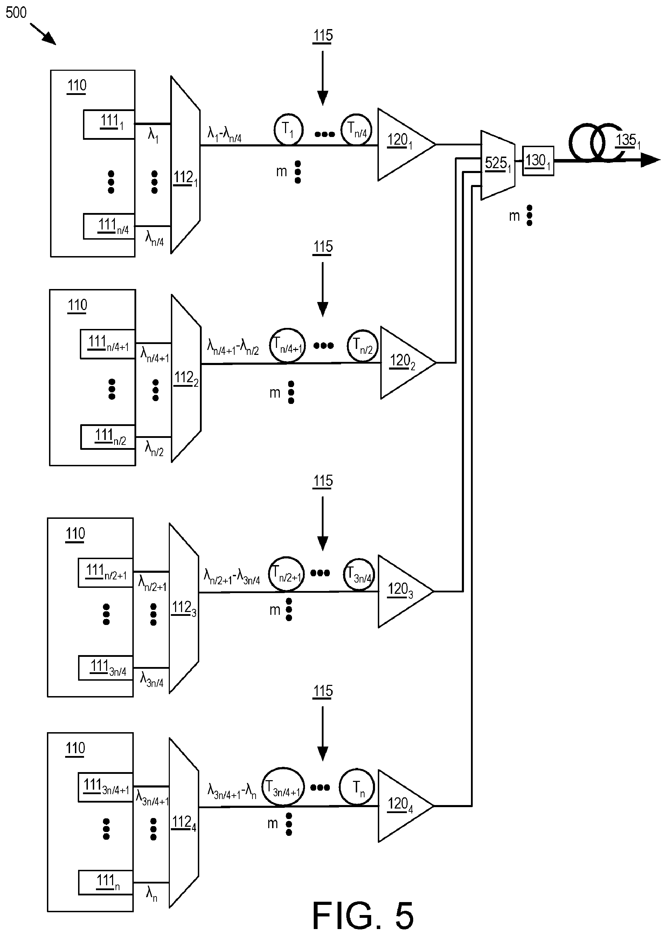

Multi-band WDM OCI architectures in accordance with embodiments herein may have more than two bands. For the transmission throughput n x m x R, the number of wavelengths n is divided by a number of bands *k* (*k*=2*,* 4, ...), with each of *k* bands including a smaller number of wavelengths *n*/*k* that optimizes performance. FIG. 5 is a schematic of a scalable multi-band OCI transmitter architecture 500, in accordance with some quad-band (i.e., *k*=4) embodiments. For clarity, reference numbers introduced in architecture 100 (FIG. 1) are retained in architecture 500 (FIG. 5) where the photonic component is substantially the same. As shown, *n* channel wavelengths are divided into four different bands, with each band having the same number of wavelengths. The number of channel wavelengths may vary (e.g., 8, 16, 32, etc.) with each band consisting of ¼ of the wavelengths (e.g., 2, 4, 8, etc.). Similar to dual-band embodiments, shortest wavelengths are grouped together within one band while longest wavelengths are grouped together within another band. A remaining half of the wavelengths are further divided into a moderately short wavelength band and a moderately long wavelength band. For transmitter architecture 500, the wavelengths λ₁- λ*ₙ* may span any of the spectral range described above in the context of transmitter architecture 100 (FIG. 1). Channel spacing over λ₁- λ*ₙ* may similarly vary with implementation. However, for some DWDM embodiments, channel spacing is less than 1.6 nm (i.e., <200 GHz for 1550 nm) for at least the channel wavelengths in one of the bands λ₁-λ_{*n*/4}, λ_{*n*/4+1}*-*λ_{*n*/2}, λ_{*n*/2+1}-λ_{3*n*/4k}, λ_{*3*/4+1}-λ*ₙ*. An inter-band spacing between a longest channel of a band (e.g., λ_{*n*/4}) and the shortest channel of a next band (e.g., λ_{*n*/4+1}) may be approximately the same as intra-band channel spacing between consecutive wavelengths within one of the bands. Alternatively, inter-band spacing be significantly different than intra-band channel spacing (e.g., >50% larger).

Photonic circuitry for each of four WDM bands further includes SOA₁ - SOA₄. Dividing channel counts into more bands may further mitigate cross-gain modulation penalties, four-wave mixing and SOA nonlinearity characteristics, with less optical power saturation for better BER floor margins. In some embodiments, each of SOA₁ - SOA₄ is band-specific. For example, each of SOA₁ - SOA₄ may have a unique center wavelength suitable for the corresponding wavelength band. In some embodiments, SOA₁ has a center wavelength proximal to the center of λ₁-λ_{*n*/4} while SOA₄ has a center wavelength proximal to the center of λ_{*n*/4+1}-λ_{*n*/2}. Alternatively, SOA₁ and SOA₂ may have a same center wavelength (e.g., proximal to λ_{*n*/4}) while SOA₃ and SOA₄ also have a same center wavelength that is different from that of SOA₁ and SOA₂ (e.g., proximal to λ_{*3n*/4}).

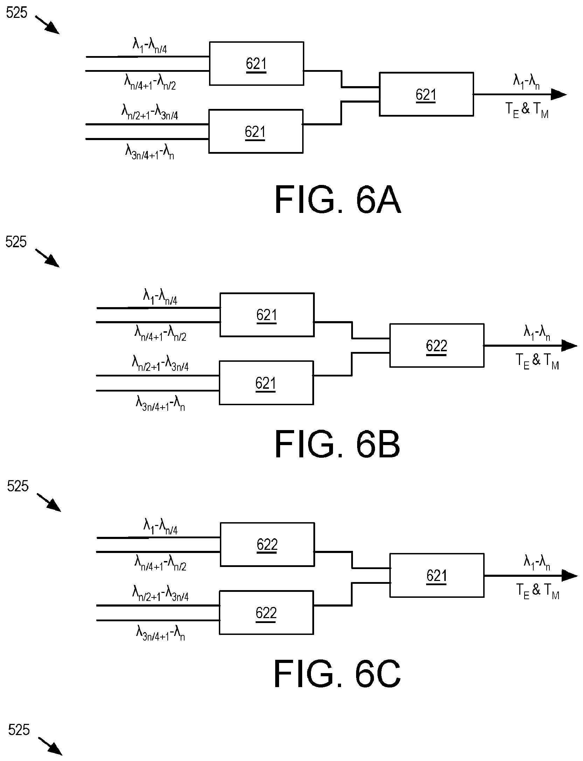

Transmitter architecture 500 further comprises a 4x1 MUX 525 for each of *m* waveguides that are coupled to one of *m* fiber couplers 130. In some examples, 4x1 MUX 525 comprise at least one polarization rotator-combiner converting some TE guided modes into TM guided modes. FIG. 6A-6C are schematics of a 4x1 MUX, in accordance with some illustrative embodiments.

Referring first to FIG. 6A, 4x1 MUX 525 comprises three PRC 621 in a cascaded arrangement where a first pair of four waveguides conveying the two shortest of the four bands are coupled into a pair of input ports of a first PRC 621, a second pair of four waveguides conveying the two longest of the four bands are coupled into a pair of input ports of a second PRC 621, and the output port of each of the first and second PRC 621 are coupled to input ports of a third PRC 621. WDM signals comprising all of wavelengths λ₁ - λ*ₙ*, some propagating in a TE guided mode and others propagating in a TM guided mode, exit the third PRC 621.

FIG. 6B illustrates another embodiment of 4x1 MUX 525, which comprises two 2x1 PRC 621 and a 2x1 MMI 622. In this example, a first pair of four waveguides conveying the two shortest of the four bands are coupled into a pair of input ports of a first PRC 621. A second pair of four waveguides conveying the two longest of the four bands are coupled into a pair of input ports of a second PRC 621. The output port of each of the first and second PRC 621 are coupled to input ports of MMI 622 that combines those WDM signals propagating in a TE guided mode, and combines those WDM signals propagating in a TM guided mode.

FIG. 6C illustrates another embodiment of 4x1 MUX 525, which comprises two 2x1 MMI 622 coupled into one 2x1 PRC 621. In this example, a first pair of four waveguides conveying the two shortest of the four bands are coupled into a pair of input ports of a first MMI 622 for power combination while a second pair of four waveguides conveying the two longest of the four bands are coupled into a pair of input ports of a second MMI 622. The output port of each of the first and second MMI 622 are coupled to input ports of a PRC 621 that converts a TE guided mode from one of the MMI 622 into a TM guided mode that is output with another TE guided mode.

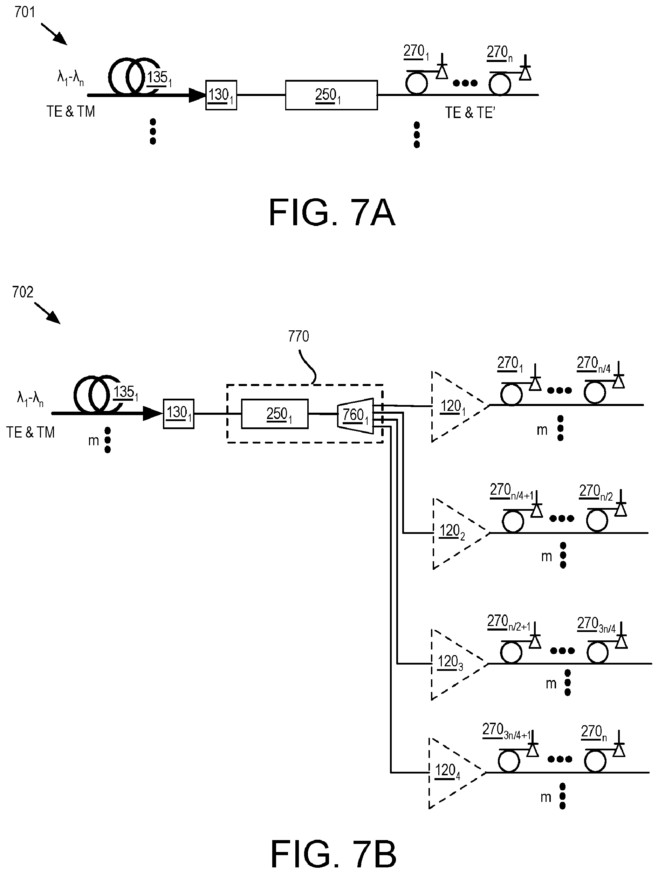

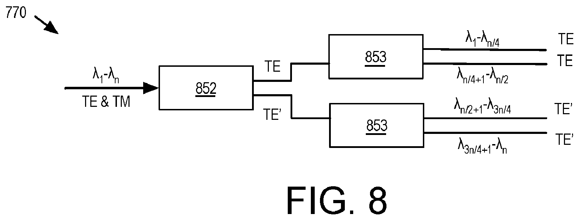

FIG. 7A and 7B are schematics of multi-band OCI receiver architectures, in accordance with some embodiments. Referring first to FIG. 7A, OCI receiver architecture 701 is substantially the same as receiver architecture 201 (FIG. 2A) and comprises *n* wavelength selective signal detectors 270 coupled to an optical waveguide through signal conditioner 250 further comprising a PSR and PC to convert WDM signals propagating in TE and TM modes to only TE modes. FIG. 7B illustrates an OCI receiver architecture 702 that comprises a 1x4 optical demultiplexer 760. For embodiments that include a PSR and PC as signal conditioner 250, demultiplexer 760 is a 1x4 band DeMUX. With demultiplexer 760, architecture 702 can include *k* (e.g., 4) banded SOAs 120 optimized for a subset of *n* wavelengths in preference over a wide-band SOA offering lower performance for *n* wavelengths. In other embodiments, demultiplexer 760 is a 1x4 polarization demultiplexer and optical circuitry 770 has an alternative configuration, for example, as further illustrated in FIG. 8.

FIG. A illustrates an embodiment where optical circuitry 770 comprises a 1x2 PSR 852 that is to split the received WDM optical signals propagating in TE & TM modes on the basis of polarizations and then is to convert the signals propagating in the TM mode to a TE guided mode (TE'). One output port of PSR 852 is coupled to an input port of a 1x2 (blue) band pass filter 853, which is typically a single-polarization and is to discriminate between wavelengths λ₁ - λ_{*n*/*4*} and wavelengths *λ*_{*n*/*4+*1} - λ_{*n*/}*₂.* Another output port of PSR 852 is coupled to an input port of a second 1x2 (red) BPF 853 that is to discriminate between wavelengths *λ*_{*n*/*4*+1} - *λ*_{*3n*/*4*} and wavelengths λ_{*3n*/*4*+1}- λ*ₙ*. Although a 1x2 band pass filter may induce optical loss, it enables the use of a micro ring add/drop filter with a small free-spectral range and/or a large ring radius and it can use the band SOA to compensate for the loss.

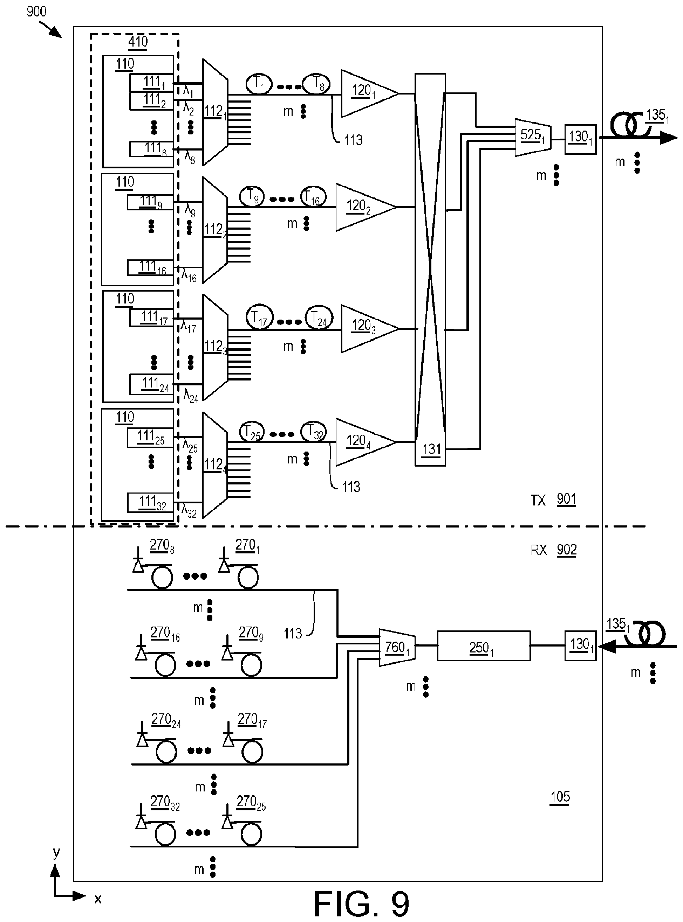

FIG. 9 illustrates a PIC 900 implementation of a quad-band OCI transceiver architecture for 32 channels, in accordance with some embodiments. For clarity, reference numbers previously introduced for dual-band OCI transceiver PIC 400 (FIG. 4) are retained in architecture 900 for optical components that are substantially the same.

PIC 900 is advantageously a single-chip transceiver, including one monolithic region of substrate 105. In advantageous embodiments, substrate 105 comprises one or more layers of silicon. In exemplary SiPh embodiments, optical transmitter circuitry 901 implements quad-band transmitter architecture 500 (FIG. 5) with planar waveguides, which may comprise a ridge over substrate 105. The planar ridge waveguides may comprise silicon, for example as either pure silicon or as a compound of silicon and nitrogen (e.g., Si₃N₄). In some embodiments, transmitter circuitry 901 includes an integrated laser source 410. In other embodiments denoted by the dashed box, laser source 410 may be external of PIC 900 with transmitter circuitry 901 instead including additional fiber couplers (not depicted) to interface with an external laser source. Each light emitter 111 is advantageously a laser diode, and more specifically a hybrid-silicon laser diode for exemplary SiPh embodiments.

As shown, a first emitter array 110 outputs optical signals within a first wavelength band comprising 8 shorter wavelengths λ₁ - λ₈. A second emitter array 110 outputs optical signals within a second wavelength band comprising 8 longer wavelengths λ₉ - λ₁₆. A third emitter array 110 outputs optical signals within a third wavelength band comprising 8 longer wavelengths λ₁₇ - λ₂₄. A fourth emitter array 110 outputs optical signals within a fourth wavelength band comprising 8 longer wavelengths λ₂₅ - λ₃₂. Optical MUX/splitters 112₁ - 112₄ output DWM signals propagated by each of *m* optical waveguides 1 13, substantially as described above. In some embodiments where MUX/splitters 112 each comprise a MMI coupler, the MMI coupler includes m input ports optically coupled to one light emitter 111₁-111₃₂. Optical MUX/splitters 112₁ - 112₄ may all be of substantially the same architecture. For a first band, each of *m* waveguides 113 are coupled to 8 MRM and further coupled to one of *m* SOA 120₁. For a second band, each of *m* waveguides 113 are coupled to 8 MRM and further coupled to one of *m* SOA 120₂. For a third band, each of *m* waveguides 113 are coupled to 8 MRM and further coupled to one of *m* SOA 120₃. For a fourth band, each of *m* waveguides 113 are coupled to 8 MRM and further coupled to one of *m* SOA 120₄. Output ports of SOA₁ - SOA₄ are optically coupled through separate planar waveguides that convey signals to input ports of cach of *m* optical 4x1 multiplexers 525 through one or more waveguide intersection array 131.

PIC 900 includes a first set of *m* fiber couplers 130 coupled to output ports of multiplexers 525 and a second set of m fiber couplers 130 coupled to one of *m* input signal conditioners 250 within receiver 902. PIC 900 further may further include any of the photonic circuitry described for the receiver architectures above terminating at 32 optical signal detectors 270.

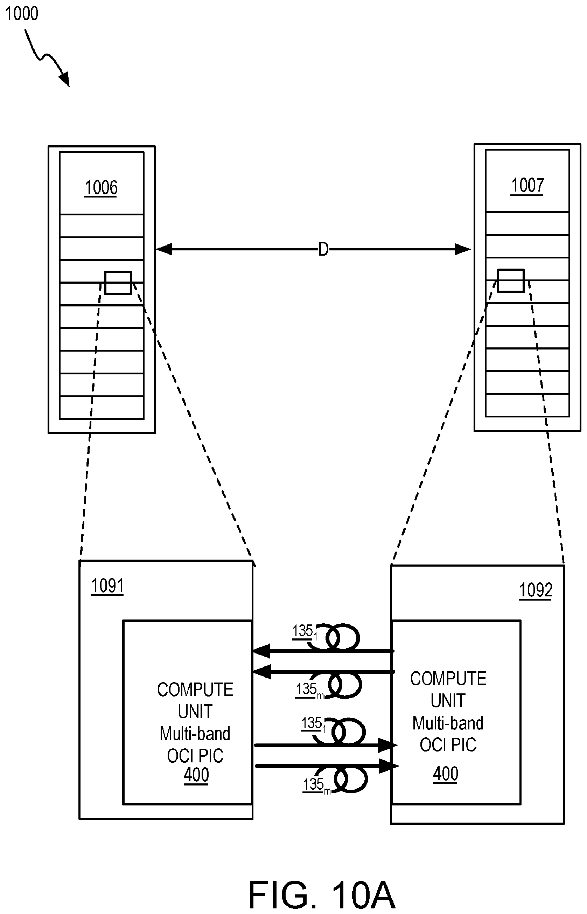

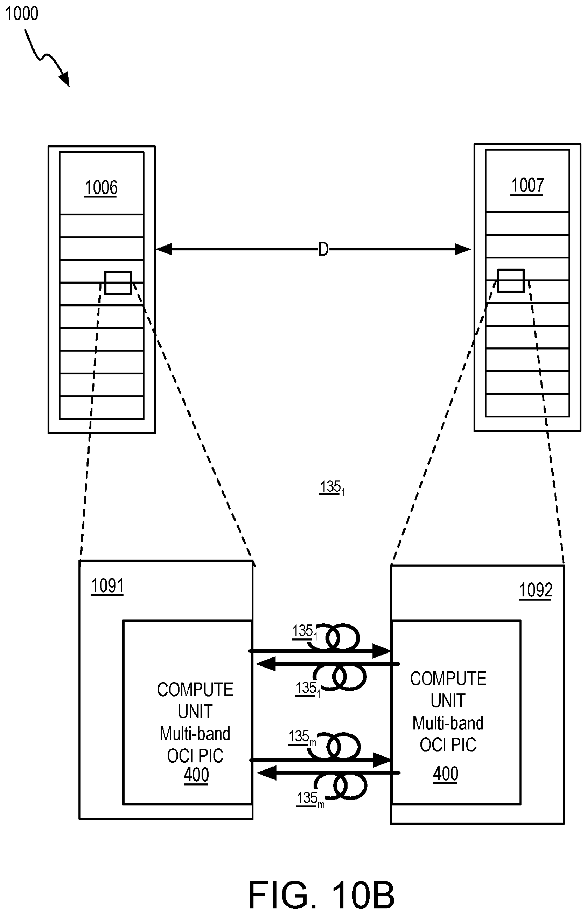

The OCI transmitter and receiver architectures described herein, and the PIC transceiver implementations further described herein may be utilized in a wide variety of systems and platforms. FIG. 10 illustrates computation cluster 1000 comprising a WDM OCI link comprising optical fibers 135 spanning a distance D between two computation systems 1006 and 1007. Distance D may range from centimeters to 250 m, for example. Computation systems 1006 and 1007 may each be a commercial server, for example including any number of high-performance compute units, for example configured within racks. As further illustrated in the expanded view, the OCI link comprises one PIC 400 interfacing to a first computation unit 1091 of system 1006 and another PIC 400 interfacing to a second computation unit 1092 of system 1007. PIC 400 includes one or more of the multi-band features described elsewhere herein for PIC 400 (or PIC 900).

In FIG. 10B, computation cluster 1000 comprises an alternative Tx-Rx optical fiber pairing option advantageous fort PCIe/UCIe to fiber/wavelength mapping. One or both of Computation units 1091 and 102 may include an optical waveguide crossbar (e.g., similar to crossbar 131 shown in Fig 4 and Fig 9) to map any fiber with any channel wavelength needing for such pair-wise Tx-Rx fiber grouping.

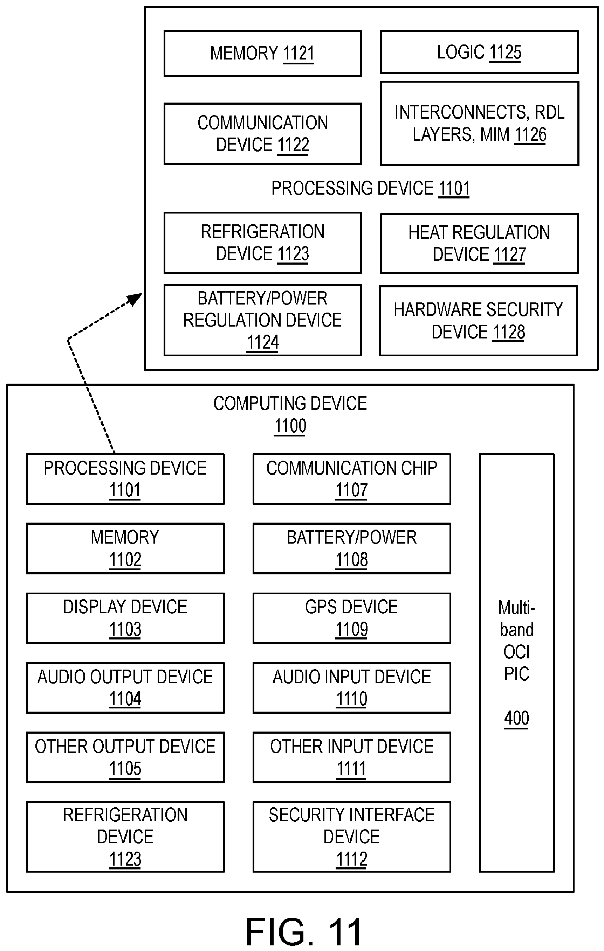

FIG. 11 is a block diagram of a computing device 1100 in accordance with some embodiments. For example, one or more components of computing device 1100 may include any of the multi-band WDM transceivers discussed elsewhere herein. A number of components are illustrated in FIG. 11 as included in computing device 1100, but any one or more of these components may be omitted or duplicated, as suitable for the application. In some embodiments, some of the components included in computing device 1100 may be attached to one or more printed circuit boards (e.g., a motherboard). In some embodiments, various ones of these components may be fabricated onto a single system-on-a-chip (SoC) die or implemented with a disintegrated plurality of chiplets or tiles packaged together. Additionally, in various embodiments, computing device 1100 may not include one or more of the components illustrated in FIG. 11, but computing device 1100 may include interface circuitry for coupling to the one or more components. For example, computing device 1100 may not include a display device 1103, but may include display device interface circuitry (e.g., a connector and driver circuitry) to which display device 1103 may be coupled.

Computing device 1100 may include a processing device 1101 (e.g., one or more processing devices). As used herein, the term processing device or processor indicates a device that processes electronic data from registers and/or memory to transform that electronic data into other electronic data that may be stored in registers and/or memory. Processing device 1101 may include a memory 1121, a communication device 1122, a refrigeration/active cooling device 1123, a battery/power regulation device 1124, logic 1125, interconnects 1126, a heat regulation device 1127, and a hardware security device 1128.

Processing device 1101 may include one or more digital signal processors (DSPs), application-specific integrated circuits (ASICs), central processing units (CPUs), graphics processing units (GPUs), cryptoprocessors (specialized processors that execute cryptographic algorithms within hardware), server processors, or any other suitable compute units.

Processing device 1101 may include a memory 1102, which may itself include one or more memory devices such as volatile memory (e.g., dynamic random-access memory (DRAM)), nonvolatile memory (e.g., read-only memory (ROM)), flash memory, solid state memory, and/or a hard drive. In some embodiments, processing device 1101 shares a package with memory 1102. This memory may be used as cache memory and may include embedded dynamic random-access memory (eDRAM) or spin transfer torque magnetic random-access memory (STT-M RAM).

Computing device 1100 may include a heat regulation/refrigeration device 1123. Heat regulation/refrigeration device 1123 may maintain processing device 1101 (and/or other components of computing device 1100) at a predetermined low temperature during operation. This predetermined low temperature may be any temperature discussed elsewhere herein.

In some embodiments, computing device 1100 may include a communication chip 1107 (e.g., one or more communication chips). For example, the communication chip 1107 may be configured for managing wireless communications for the transfer of data to and from computing device 1100. The term "wireless" and its derivatives may be used to describe circuits, devices, systems, methods, techniques, communications channels, etc., that may communicate data through the use of modulated electromagnetic radiation through a nonsolid medium.

Computing device 1100 includes PIC 400, for example having one of the photonic WDM transceiver architectures described herein. PIC 400 may facilitate communication between one or more instances of processing device 1101 and/or one or more instances of memory 1102, for example.

Computing device 1100 may include battery/power circuitry 1108. Battery/power circuitry 1108 may include one or more energy storage devices (e.g., batteries or capacitors) and/or circuitry for coupling components of computing device 1100 to an energy source separate from computing device 1100 (e.g., AC line power).

Computing device 1100 may include a display device 1103 (or corresponding interface circuitry, as discussed above). Display device 1103 may include any visual indicators, such as a heads-up display, a computer monitor, a projector, a touchscreen display, a liquid crystal display (LCD), a light-emitting diode display, or a flat panel display, for example.

Computing device 1100 may include an audio output device 1104 (or corresponding interface circuitry, as discussed above). Audio output device 1104 may include any device that generates an audible indicator, such as speakers, headsets, or earbuds, for example.

Computing device 1100 may include an audio input device 1110 (or corresponding interface circuitry, as discussed above). Audio input device 1110 may include any device that generates a signal representative of a sound, such as microphones, microphone arrays, or digital instruments (e.g., instruments having a musical instrument digital interface (MIDI) output).

Computing device 1100 may include a global positioning system (GPS) device 1109 (or corresponding interface circuitry, as discussed above). GPS device 1109 may be in communication with a satellite-based system and may receive a location of computing device 1100, as known in the art.

Computing device 1100 may include another output device 1105 (or corresponding interface circuitry, as discussed above). Examples include an audio codec, a video codec, a printer, a wired or wireless transmitter for providing information to other devices, or an additional storage device.

Computing device 1100 may include another input device 1111 (or corresponding interface circuitry, as discussed above). Examples may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

Computing device 1100 may include a security interface device 1112. Security interface device 1112 may include any device that provides security measures for computing device 1100 such as intrusion detection, biometric validation, security encode or decode, managing access lists, malware detection, or spyware detection.

Computing device 1100, or a subset of its components, may have any appropriate form factor, such as a server or other networked computing component, a mobile device, a printer, a scanner, a monitor, a set-top box, an entertainment control unit, a vehicle control unit, a digital camera, a digital video recorder, or a wearable computing device.

While certain features set forth herein have been described with reference to various implementations, this description is not intended to be construed in a limiting sense. Hence, various modifications of the implementations described herein, as well as other implementations, which are apparent to persons skilled in the art to which the present disclosure pertains are deemed to lie within the spirit and scope of the present disclosure.

It will be recognized that practice of the disclosed techniques and architectures is not limited to the embodiments so described but can be modified and altered without departing from the scope of the appended claims. For example, the above embodiments may include specific combinations of features as further provided below.

In first examples, an apparatus, comprises a first plurality of optical modulators coupled to a first optical waveguide to generate a first plurality of intensity modulated wavelength division multiplexed (WDM) optical signals spanning a first band comprising two or more channel wavelengths. The apparatus comprises a second plurality of optical modulators coupled to a second optical waveguide to generate a second plurality of intensity modulated WDM optical signals spanning a second band of two or more channel wavelengths, longer than those of the first band. The apparatus comprises an optical multiplexer, comprising a first input port coupled to the first optical waveguide and a second input port coupled to the second optical waveguide. The apparatus comprises a first semiconductor optical amplifier (SOA) coupled to the first optical waveguide between the multiplexer and the first plurality of modulators, the first SOA having a first center wavelength. The apparatus comprises a second semiconductor optical amplifier (SOA) coupled to the second optical waveguide between the multiplexer and the second plurality of modulators, the second SOA having a second center wavelength, different than the first center wavelength.

In second examples, for any of the first examples the apparatus comprises a first plurality of light emitters multiplexed into the first optical waveguide. Individual ones of the first plurality of light emitters are to output an individual one of the optical signals spanning the first band. The apparatus comprises a second plurality of light emitters multiplexed into the second optical waveguide. Individual ones of the second plurality of light emitters are to output an individual one of the optical signals spanning the second band.

In third examples, for any of the first or second examples the modulators, the first and second optical waveguides, the optical multiplexer, the first SOA and the second SOA are integrated over a single substrate comprising silicon.

In fourth examples, for any of the first through third examples a 3 dB gain bandwidth of the first SOA is exclusive of at least one wavelength within the second band and a 3 dB gain bandwidth of the second SOA is exclusive of at least one wavelength within the first band.

In fifth examples, for any of the first through fourth examples the optical multiplexer comprises a bandpass filter (BPF), a multi-mode interference (MMI) combiner, or a polarization rotator and combiner (PRC).

In sixth examples, for the of the first through fifth examples the first band comprises 2 channel wavelengths, the second band comprises 2 channel wavelengths. The first optical waveguide is one of at least 2 first optical waveguides. The second optical waveguide is one of at least 2 second optical waveguides. The first plurality of optical modulators and second plurality of optical modulators each comprise 2 optical modulators. The first SOA is one of at least 2 first semiconductor optical amplifiers,. Individual ones of the first semiconductor optical amplifiers are coupled to individual ones of the first optical waveguides. The second SOA is one of at least 2 second semiconductor optical amplifiers. Individual ones of the second semiconductor optical amplifiers are coupled to individual ones of the second optical waveguide. The optical multiplexer is one of at least 2 optical multiplexers. Individual ones of the optical multiplexers are coupled to an individual one of the first optical waveguides and an individual one of the second optical waveguides.

In seventh examples, for any of the first through sixth examples the apparatus comprises a third plurality of optical modulators coupled to a third optical waveguide to generate a third plurality of intensity modulated WDM optical signals spanning a third band of channel wavelengths, longer than those of the second band. The apparatus comprises a third semiconductor optical amplifier (SOA) coupled to the third optical waveguide between the multiplexer and the third plurality of modulators, the third SOA having a third center wavelength, different than the first and second center wavelengths. The apparatus comprises a fourth plurality of optical modulators coupled to a fourth optical waveguide to generate a fourth plurality of intensity modulated WDM optical signals spanning a fourth band of channel wavelengths, longer than those of the third band. The apparatus comprises a fourth semiconductor optical amplifier (SOA) coupled to the fourth optical waveguide between the multiplexer and the fourth plurality of modulators, the fourth SOA having a fourth center wavelength that is different than the first, second and third center wavelengths.

In eighth examples, for any of the seventh examples the optical multiplexer is coupled to each of the first, second, third and fourth optical waveguides and the optical multiplexer comprises at least one polarization rotator and combiner (PRC).

In ninth examples, for any of the eighth examples the optical multiplexer comprises a first PRC coupled to the first and second optical waveguides and a second PRC coupled to the third and fourth optical waveguides.

In tenth examples, the apparatus further comprises a plurality of photodetectors (PDs), and a plurality of optical add-drop filters, wherein individual ones of the PDs are coupled to an optical fiber coupler through an individual one of the optical add-drop filters.

In eleventh examples, for any of the tenth examples two or more subsets of the add-drop filters are coupled to the optical fiber coupler through at least one of a band demultiplexer or a polarization demultiplexer, and an SOA is coupled between each of the subsets of the add-drop filters and the band demultiplexer or the polarization demultiplexer.

In twelfth examples, for any of the eleventh examples a first subset and a second subset of the add-drop filters are coupled to a polarization splitter rotator (PSR) through a first bandpass filter (BPF) or a first polarization rotator (PR) and a first polarization combiner (PC). A third subset and a fourth subset of the add-drop filters are coupled to the PSR through a second BPF or a second PR and a second PC. The PSR is further coupled to the optical fiber coupler.

In thirteenth examples, a photonic integrated circuit (PIC) comprises a wave division multiplexing (WDM) receiver circuit and a multi-band WDM transmitter circuit. The WDM transmitter circuit further comprises a first planar optical waveguide to convey a first plurality of intensity modulated optical signals spanning a first band of channel wavelengths to an output optical multiplexer through a first semiconductor optical amplifier (SOA) having a first photoluminescence (PL) band. The WDM transmitter circuit further comprises a second planar optical waveguide to convey a second plurality of intensity modulated optical signals spanning a second band of channel wavelengths to the output optical multiplexer through a second SOA having a second PL band.

In fourteenth examples, for any of the thirteenth examples the multi-band WDM transmitter circuit further comprises *n* light emitters, the light emitters to output optical signals at *n* wavelength channels having a channel spacing therebetween. The transmitter circuit comprises a first input optical multiplexer coupling each of *m* first planar optical waveguides to a first subset of the light emitters associated with the first band of the wavelength channels. The transmitter circuit comprises a second input optical multiplexer coupling each of *m* second planar optical waveguides to a second subset of the light emitters associated with the second band of the wavelength channels. The transmitter circuit comprises *m* first SOAs and each of the first SOAs is coupled to one of the first planar optical waveguides. The transmitter comprises *m* second SOAs, and each of the second SOAs is coupled to one of the second planar optical waveguides. The transmitter comprises *m* output optical multiplexers. Individual ones of the output optical multiplexers are coupled to an individual one of *m* optical fiber couplers. Individual ones of the output optical multiplexers are coupled to both an individual one of the first planar optical waveguides and to an individual one of the second planar optical waveguides.

In fifteenth examples, for any of the fourteenth examples, *n* is at least 8, *m* is at least 8, the first band and the second band each comprises at least 4 wavelength channels, and the emitters comprise hybrid silicon-Group III-V lasers.

In sixteenth examples, for any of the thirteenth through fourteenth examples the WDM receiver circuitry comprises a second plurality of *m* optical fiber couplers and *n* photodetectors (PDs) coupled to each of the fiber couplers through an optical add-drop filter.

In seventeenth examples, a system comprises a first compute unit, a second compute unit, and an optical compute interconnect (OCI) coupling the first compute unit to the second compute unit through an optical fiber, wherein the OCI comprises a wave division multiplexing (WDM) receiver circuit, and a multi-band WDM transmitter circuit. The WDM transmitter circuit comprises an optical multiplexer coupled to a first planar optical waveguide to receive a first plurality of intensity modulated optical signals spanning a first band of channel wavelengths amplified by a first semiconductor optical amplifier (SOA) having a first center wavelength, and coupled to second planar optical waveguide to receive a second plurality of intensity modulated optical signals spanning a second band of channel wavelengths amplified by a second SOA having a second center wavelength.

In eighteenth examples, for any of the seventeenth examples the optical fiber is single mode fiber of a length less than 250 m and the OCI comprises a first WDM receiver circuit and a first multi-band WDM transmitter circuit coupled to opposite ends of a first optical fiber, and a second WDM receiver circuit and a second multi-band WDM transmitter circuit coupled to opposite ends of a second optical fiber.

In nineteenth examples, for any of the seventeenth through eighteenth examples the WDM receiver circuit is a multi-band WDM receiver circuit comprising at least one of an optical band demultiplexer or an optical polarization demultiplexer.

In twentieth examples, for any of the seventeenth through nineteenth examples the optical fiber is one of at least 8 optical fibers, the first band comprises 2 channel wavelengths, the second band comprises 2 channel wavelengths, the first band and the second band are coupled to each of the optical fibers, and the first and second optical waveguides each comprise a ridge comprising silicon over a substrate comprising silicon.

However, the above embodiments are not limited in this regard, and, in various implementations, the above embodiments may include the undertaking of only a subset of such features, undertaking a different order of such features, undertaking a different combination of such features, and/or undertaking additional features than those features explicitly listed. The scope of the disclosed techniques and architectures should therefore be determined with reference to the appended claims, along with the full scope of equivalents to which such claims are entitled.

## Claims

1. An apparatus, comprising:
a first plurality of optical modulators coupled to a first optical waveguide to generate a first plurality of intensity modulated wavelength division multiplexed (WDM) optical signals spanning a first band comprising two or more channel wavelengths;
a second plurality of optical modulators coupled to a second optical waveguide to generate a second plurality of intensity modulated WDM optical signals spanning a second band of two or more channel wavelengths, longer than those of the first band;
an optical multiplexer, comprising a first input port coupled to the first optical waveguide and a second input port coupled to the second optical waveguide;
a first semiconductor optical amplifier (SOA) coupled to the first optical waveguide between the multiplexer and the first plurality of modulators, the first SOA having a first center wavelength; and
a second semiconductor optical amplifier (SOA) coupled to the second optical waveguide between the multiplexer and the second plurality of modulators, the second SOA having a second center wavelength, different than the first center wavelength.

2. The apparatus of claim 1, further comprising:
a first plurality of light emitters multiplexed into the first optical waveguide, wherein individual ones of the first plurality of light emitters are to output an individual one of the optical signals spanning the first band; and
a second plurality of light emitters multiplexed into the second optical waveguide, wherein individual ones of the second plurality of light emitters are to output an individual one of the optical signals spanning the second band.

3. The apparatus of claim 1, wherein the modulators, the first and second optical waveguides, the optical multiplexer, the first SOA and the second SOA are integrated over a single substrate comprising silicon.

4. The apparatus of claim 1, wherein a 3 dB gain bandwidth of the first SOA is exclusive of at least one wavelength within the second band and a 3 dB gain bandwidth of the second SOA is exclusive of at least one wavelength within the first band.

5. The apparatus of claim 1, wherein the optical multiplexer comprises a bandpass filter (BPF), a multi-mode interference (MMI) combiner, or a polarization rotator and combiner (PRC).

6. The apparatus of any one of claims 1-5, wherein:
the first band comprises 2 channel wavelengths;
the second band comprises 2 channel wavelengths;
the first optical waveguide is one of at least 2 first optical waveguides;
the second optical waveguide is one of at least 2 second optical waveguides;
the first plurality of optical modulators and second plurality of optical modulators each comprise 2 optical modulators;
the first SOA is one of at least 2 first semiconductor optical amplifiers, wherein individual ones of the first semiconductor optical amplifiers are coupled to individual ones of the first optical waveguides;
the second SOA is one of at least 2 second semiconductor optical amplifiers, wherein individual ones of the second semiconductor optical amplifiers are coupled to individual ones of the second optical waveguides;
the optical multiplexer is one of at least 2 optical multiplexers, wherein individual ones of the optical multiplexers are coupled to an individual one of the first optical waveguides and an individual one of the second optical waveguides.

7. The apparatus of any one of claims 1-5, further comprising:
a third plurality of optical modulators coupled to a third optical waveguide to generate a third plurality of intensity modulated WDM optical signals spanning a third band of channel wavelengths, longer than those of the second band;
a third semiconductor optical amplifier (SOA) coupled to the third optical waveguide between the multiplexer and the third plurality of modulators, the third SOA having a third center wavelength, different than the first and second center wavelengths;
a fourth plurality of optical modulators coupled to a fourth optical waveguide to generate a fourth plurality of intensity modulated WDM optical signals spanning a fourth band of channel wavelengths, longer than those of the third band; and
a fourth semiconductor optical amplifier (SOA) coupled to the fourth optical waveguide between the multiplexer and the fourth plurality of modulators, the fourth SOA having a fourth center wavelength that is different than the first, second and third center wavelengths.

8. The apparatus of claim 7, wherein the optical multiplexer is coupled to each of the first, second, third and fourth optical waveguides and wherein the optical multiplexer comprises at least one polarization rotator and combiner (PRC).

9. The apparatus of claim 8, wherein the optical multiplexer comprises a first PRC coupled to the first and second optical waveguides and a second PRC coupled to the third and fourth optical waveguides.

10. The apparatus of claim 1, further comprising a plurality of photodetectors (PDs), and a plurality of optical add-drop filters, wherein individual ones of the PDs are coupled to an optical fiber coupler through an individual one of the optical add-drop filters.

11. The apparatus of claim 10, wherein:
two or more subsets of the add-drop filters are coupled to the optical fiber coupler through at least one of a band demultiplexer or a polarization demultiplexer;
an SOA is coupled between each of the subsets of the add-drop filters and the band demultiplexer or the polarization demultiplexer;
a first subset and a second subset of the add-drop filters are coupled to a polarization splitter rotator (PSR) through a first bandpass filter (BPF) or a first polarization rotator (PR) and a first polarization combiner (PC);
a third subset and a fourth subset of the add-drop filters are coupled to the PSR through a second BPF or a second PR and a second PC; and
the PSR is further coupled to the optical fiber coupler.

12. A photonic integrated circuit (PIC), comprising:
a wave division multiplexing (WDM) receiver circuit; and
a multi-band WDM transmitter circuit, further comprising:
a first planar optical waveguide to convey a first plurality of intensity modulated optical signals spanning a first band of channel wavelengths to an output optical multiplexer through a first semiconductor optical amplifier (SOA) having a first photoluminescence (PL) band; and
a second planar optical waveguide to convey a second plurality of intensity modulated optical signals spanning a second band of channel wavelengths to the output optical multiplexer through a second SOA having a second PL band.

13. The PIC of claim 12, wherein the multi-band WDM transmitter circuit further comprises:
*n* light emitters, the light emitters to output optical signals at *n* wavelength channels having a channel spacing therebetween;
a first input optical multiplexer coupling each of *m* first planar optical waveguides to a first subset of the light emitters associated with the first band of the wavelength channels;
a second input optical multiplexer coupling each of *m* second planar optical waveguides to a second subset of the light emitters associated with the second band of the wavelength channels;
*m* first SOAs, wherein each of the first SOAs is coupled to one of the first planar optical waveguides;
*m* second SOAs, wherein each of the second SOAs is coupled to one of the second planar optical waveguides; and
*m* output optical multiplexers, wherein individual ones of the output optical multiplexers are coupled to an individual one of *m* optical fiber couplers, and wherein individual ones of the output optical multiplexers are coupled to both an individual one of the first planar optical waveguides and to an individual one of the second planar optical waveguides.

14. The PIC of claim 13, wherein:
*n* is at least 8;
*m* is at least 8;
the first band and the second band each comprises at least 4 wavelength channels; and
the emitters comprise hybrid silicon-Group III-V lasers.

15. The PIC of any one of claim 12-14, wherein the WDM receiver circuit comprises:
a second plurality of *m* optical fiber couplers; and
*n* photodetectors (PDs) coupled to each of the fiber couplers, wherein each of the PDs is coupled through an optical add-drop filter.
